# EUROPEAN PATENT APPLICATION

(11) **EP 2 916 313 A1**
(43) Date of publication of application: **09.09.2015**
(21) Application number: 14175702.1
(22) Date of filing: 03.07.2014
(51) Int. Cl.: G09G 5/00, G06F 3/01

(54) **Display device and operating method thereof**

(30) Priority: 06.03.2014 KR 20140026376
(71) Applicant: LG Electronics, Inc., Seoul 150-721 (KR)
(72) Inventor: PARK, Byungsun, 137-893 SEOUL (KR); JIN, Doyoon, 137-893 SEOUL (KR); CHO, Taegil, 137-893 SEOUL (KR)
(74) Representative: Cabinet Plasseraud

(57) **Abstract**

A display device and an operating method thereof are provided. The display device includes a display unit and a user recognition unit recognizing a user. A control unit in the display device provides a user interface screen corresponding to position relationship between the recognized user and the display device through the display unit.

## Description

### BACKGROUND

The present disclosure relates to a display device and an operating method thereof.

Recently, a digital service using a wired or wireless communication network is prevailed. The digital TV service may provide various services that are difficult to provide in existing analog broadcast services.

For example, an internet protocol television (IPTV) service, which is a kind of the digital TV service, provides bilateralness allowing a user to actively select a kind of a viewing program or a viewing time. The IPTV service may provide various additional services such as internet searching, home shopping, and an online game on the basis of the bilateralness.

In addition, a recent smart TV constructs a user interface screen for providing a user with various pieces of information.

However, there is limitation in providing a consistent user interface screen without consideration of position relation between the user and TV in the related art.

### SUMMARY

Embodiments provide a display device providing various types of user interface screens according to position relation between a user and a display device and allowing the user to effectively control functions of the display device.

Embodiments also provide an operating method of a display device capable of providing a user interface screen on the basis of a connection state with an external device controlling an operation of the display device.

In one embodiment, a display device includes: a display unit; a user recognition unit configured to recognize a user; and a control unit configured to provide a user interface screen corresponding to the position relationship between the recognized user and the display device through the display unit.

In another embodiment, an operating method of a display device includes: recognizing a user in front of the display device; and providing a user interface screen corresponding to position relationship between the recognized user and the display device.

### BRIEF DESCRIPTION OF THE DRAWINGS

Fig. 1 a block diagram illustrating a configuration of a display device according to an embodiment.
Fig. 2 is a block diagram illustrating a remote controller according to an embodiment.
Figs. 3A to 3C are views for explaining methods of controlling a display device through the remote controller according to an embodiment.
Fig. 4 is a flow chart for explaining an operating method of a display device according to an embodiment.
Fig. 5 is a view for explaining a situation in which a user is in a first area according to an embodiment.
Fig. 6 illustrates an exemplary first user interface screen according to an embodiment.
Fig. 7 is a view for explaining a situation in which the user is in a second area according to an embodiment.
Fig. 8 illustrates an exemplary second user interface screen according to an embodiment.
Fig. 9 is a view for explaining the case where the user is in the second area and in the left side of the screen displayed on a display device according to an embodiment.
Fig. 10 shows a second user interface screen displaying a user who is in the second area and in the left side of the screen displayed on a display device.
Fig. 11 is a view illustrating an example displaying a screen change notification window according to a change in position relation between the user and the display device according to an embodiment.
Fig. 12 is a view for explaining a situation where the user is in a third area according to an embodiment.
Figs. 13 to 20 illustrate exemplary third user interface screens according to embodiments.
Figs. 21 to 23 are views for explaining a situation where the user is not in the first, second, or third area according to embodiments.
Fig. 24 is a flowchart illustrating an operating method of a display device according another embodiment.
Figs. 25 and 26 are views for explaining an operation of a display 100 when a plurality of users exist according to an embodiment.
Figs. 27 to 29 are views illustrating embodiments in which a user interface screen is changed according to position relationship between the user and a display device when an advertisement video is played according to an embodiment.
Fig. 30 is a view for explaining a third interface screen according to another embodiment.

### DETAILED DESCRIPTION OF THE EMBODIMENTS

Reference will now be made in detail to the embodiments of the present disclosure, examples of which are illustrated in the accompanying drawings. In the following description, usage of suffixes such as 'module', 'part' or 'unit' used for referring to elements is given merely to facilitate explanation of the present invention, without having any significant meaning or role by itself.

A display device according to an embodiment is an intelligent display device that a computer supporting function is added to a broadcast receiving function, has an additional function of the internet as well as a function faithful to the broadcast reception, and may include an interface convenient to use, such as a handwriting input device, touch screen, or spatial remote controller. In addition, the display device may be connected to the internet and computer by a support of wired or wireless internet function and also perform functions of an email, web browsing, banking or game. For these various functions, a standardized general-purpose operating system (OS) may be used.

Accordingly, the display device described herein may perform, for example, user-friendly various functions by enabling various applications to be freely added to or deleted from a general-purpose OS kernel. The display device may be, for example in detail, a network TV, a hybrid broadcast broadband TV(HBBTV), a smart TV, a light emitting diode (LED) TV, or an organic LED (OLED) TV, and may be applied to a smart phone as the case may be.

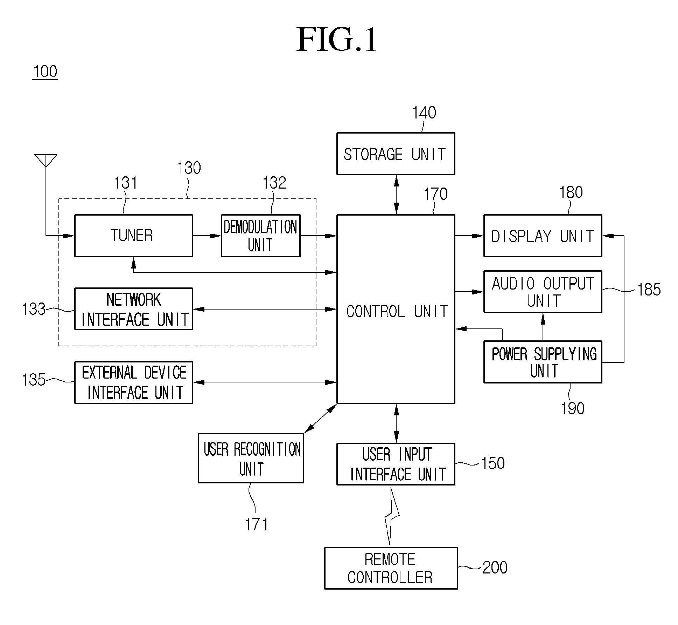

Fig. 1 is a block diagram illustrating a configuration of a display device according to an embodiment.

Referring to Fig. 1, a display device 100 may include a broadcast receiving unit 130, an external device interface unit 135, a storage unit 140, a user input interface unit 150, a control unit 170, a user recognition unit 171, a display unit 180, an audio output unit 185, and a power supply unit 190. Furthermore, the broadcast receiving unit 130 may include a tuner 131, a demodulation unit 132, and a network interface unit 133.

The external interface unit 135 may receive applications or an application list inside an adjacent external device and deliver them to the control unit 170 or the storage unit 140.

The network interface unit 133 may provide an interface for connecting the display device 100 to a wired/wireless network including the internet. The network interface unit 133 may transmit or receive data to or from another user or another electronic device through the connected network or another network linked to the connected network.

In addition, the network interface unit 133 may transmit a part of content data stored in the display device 100 to a selected user or a selected electronic device from among other users or other electronic devices pre-registered on the display device 100.

The network interface unit 133 may access a predetermined web page through the connected network or another network linked to the connected network. That is, the network interface unit 133 may access the predetermined web page through the network and transmit or receive data to or from a corresponding server.

In addition, the network interface unit 133 may receive content or data provided by a content provider or a network operator. That is, the network interface unit 133 may receive content such as movie, advertisement, game, video on demand (VOD), or a broadcast signal and related information provided by the content provider or the network operator through the network.

Furthermore, the network interface unit 133 may receive firmware update information and update files provided by the network operator and transmit data to the internet, content provider, or network operator.

The network interface unit 133 may select and receive a desired application from among applications opened in public.

The storage unit 140 may store programs for processing and controlling signals inside the control unit 170, and signal-processed images, audios or data signals.

In addition, the storage unit 140 may perform functions of temporarily storing images, audios, or data signals input from the external device interface unit 135 or the network interface unit 133, or may store information on predetermined images through a channel memory function.

The storage unit 140 may store applications or application lists input from the external device interface unit 135 or the network interface unit 133.

The display device 100 may play content files such as video files, still image files, music files, document files, or application files, stored in the storage unit 140, and provide them to the user.

The user input interface unit 150 may deliver signals input by the user to the control unit 170 or signals from the control unit to the user. For example, the user input interface unit 150 may receive and process control signals such as power on/off, channel selection, or screen setting from a remote controller 200 in various communication schemes such as a Bluetooth, ultra wideband (WB), Zigbee, radio frequency (RF), or infrared (IR) communication scheme, or process and transmit control signals from the control unit 170 to the remote controller 200.

In addition, the user input interface unit 150 may deliver control signals input from a local key such as a power key, channel key, volume key, or setting key to the control unit 170.

An image signal image-processed in the control unit 170 may be input to the display unit 180 and displayed as an image corresponding to the image signal. In addition, the image signal image-processed in the control unit 170 may be input to an external output device through the external device interface unit 135.

A audio signal processed in the control unit 170 may be output to the audio output 185. In addition, the audio signal processed in the control unit 170 may be input to the external output device through the external device interface unit 135.

Besides, the control unit 170 may control overall operations inside the display device 100.

The control unit 170 may control the display device 100 by using user commands input through the user input interface unit 150 or an internal program, and access the network to allow a user to download desired applications or application lists to the display device 100.

The control unit 170 may allow video signal or audio signal on channel selected from a user to be output through the display unit 180 or the audio output unit 185.

The control unit 170 may allow image signals or audio signals received through the external device interface unit 135 from external devices such as a camera or camcorder to be output through the display unit 180 or the audio output unit 185 according to external device image playback commands received through the user input interface unit 150.

On the other hand, the control unit 170 may control the display unit 180 so as to display an image and, for example, control to allow a broadcast image input through the tuner 131, an external input image input through the external device interface unit 135, an image input through the network interface unit 133, or an image stored in the storage unit 140 to be displayed on the display unit 180. In this case, the image displayed on the display unit 180 may be a still image or a video, and a 2-dimensional or 3-dimensional image.

Furthermore, the control unit 170 may control to allow content stored in the display device 100, received broadcast content, or external input content input from outside to be played, and the content may have various types such as a broadcast image, external input image, audio file, still image, accessed wed screen, and document file.

The user recognition unit 171 may recognize the user in the front of the display device 100. Description about the user recognition unit 171 will be provided later.

The display unit 180 converts, into an RGB signal, each of an image signal, a data signal, or an on-screen display (OSD) signal processed in the control unit 170, or an image signal or data signal received through the external device interface unit 135, and generates a drive signal.

On the other hand, the display device 100 illustrated in Fig. 1 is just an embodiment, and some of illustrated elements may be integrated, added, or omitted according to specifications of the display device 100 actually implemented.

That is, two or more elements may be integrated into one or one element is divided into two or more elements, if necessary. In addition, a function performed in each block is for explaining an embodiment and a detailed operation or device thereof does not limit the scope of the present invention.

According to another embodiment, the display device 100 may not include tuner 131 and demodulation unit 132, differently from as shown in Fig. 1, and may receive an image through the network interface unit 133 or the external device interface unit 135 and play the image.

For example, the display unit 100 may be implemented as divided into an image processing device such as a set-top box for receiving broadcast signals or contents according to various network services and a content playback device playing contents input from the image processing device.

In this case, an operating method of a display device according to an embodiment described hereinafter may be performed by not only the display device 100 as described in relation to Fig. 1, but also any one of an image display device such as the divided set-top box or the content playback device including the display unit 180 and the audio output unit 185.

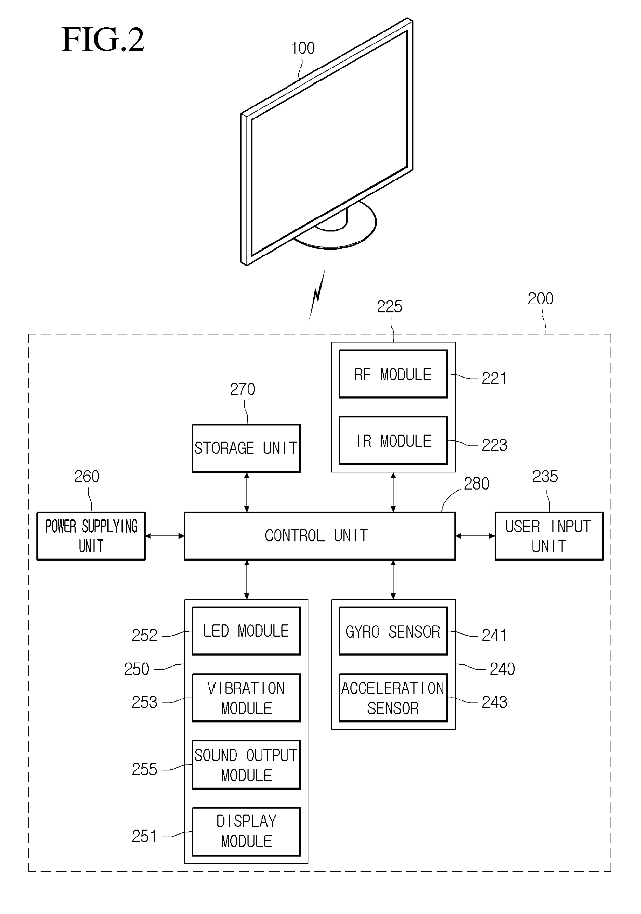

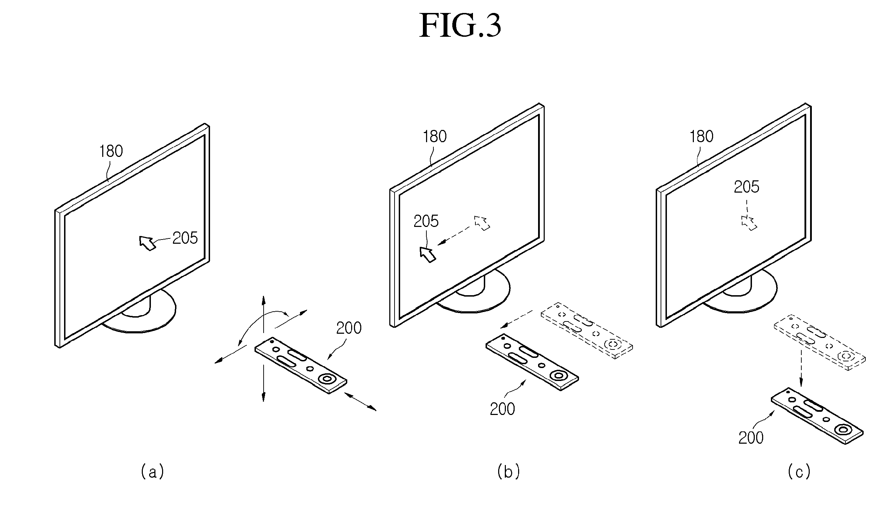

Next, a remote controller according to an embodiment is described with reference to Figs. 2 and 3.

Fig. 2 is a block diagram of a remote controller according to an embodiment and Fig. 3 illustrates an embodiment of an image displaying method of an image display device according to an embodiment using the remote controller.

First, referring to Fig. 2, a remote controller 200 may include a wireless communication unit 225, a user input unit 235, a sensor unit 240, an output unit 250, a power supplying unit 260, a storage unit 270, and a control unit 280.

Referring to Fig. 2, the wireless communication unit 225 transmits and receives a signal to and from any one of the above-described display devices according to embodiments.

The remote controller 200 includes an RF module 221 capable of transmitting and receiving a signal with the display device 100 according to RF communication specifications and an IR module 223 capable of transmitting and receiving a signal with the display device 100 according to IR communication specifications.

In addition, the remote controller 200 transmits a signal including information on movement of the remote controller 200 to the display device 100 through the RF module 22.

Furthermore, the remote controller 200 may receive a signal transmitted from the display device through the RF module 221, and transmit commands including power on/off, channel change, or volume change to the display device 100 through the IR module 223, if necessary.

The user input unit 235 may include a keypad, a button, a touch pad, or a touch screen. The user may manipulate the user input unit 235 and input commands related to the display device 100 to the remote controller 200. When the user input 235 includes a hard key button, the user may input commands related to the display device 100 to the remote controller 200 through a push operation on the hard key button.

When the user input 235 includes a touch screen, the user touches soft keys on the touch screen and input commands related to the display device 200 to the remoter control device 200. In addition, the user input unit 235 may include various kinds of input means that the user may manipulate such as a scroll key, or a jog key, but the embodiment does not limit the scope of the present invention.

The sensor unit 240 may include a gyro sensor 241 or an acceleration sensor 243, and the gyro sensor 241 may sense information on movement of the remote controller 200.

For example, the gyro sensor 241 may sense the information on the movement of the remote controller 200 on the basis of x, y, and z axes, and the acceleration sensor 243 may sense information on moving velocity of the remote controller 200. On the other hand, the remote controller 200 may further include a distance measuring sensor and measure a distance to the display unit 180 of the display device 100.

The output unit 250 may output an image or audio signal corresponding to a signal transmitted from the display device 100 or corresponding to manipulation of the user input unit 235. The user may perceive, through the output unit 250, whether the user input unit 235 is manipulated or whether the display device 100 is controlled.

For example, the output unit 250 may include an LED module 251 turned on, a vibration module 253 generating vibration, a sound output module 255 outputting a sound, or a display module outputting an image when the user input unit 235 is manipulated or a signal is transmitted or received to or from the display device 100 through the wireless communication unit 225.

In addition, the power supplying unit 260 may supply power to the remote controller 200 and may reduce power consumption by stopping supplying power when the remote controller 200 does not move for a predetermined time. The power supply unit 260 may resume supplying power when a certain key included in the remote controller 200 is manipulated.

The storage unit 270 may store various kinds of programs necessary for controlling or operating the remote controller 200, and application data, etc. When transmitting and receiving signals wirelessly to and from the display device 100 through the RF module 221, the remote controller 200 does through a predetermined frequency band.

The control unit 280 of the remote controller 200 may store, in the storage unit 270, and refer to information on a frequency band in which signals are wirelessly transmitted and received to and from the display device 100 paired with the remote controller 200.

The control unit 280 controls overall operations of the remote controller 200. The control unit 280 may transmit signals corresponding to manipulation of a certain key of the user input unit 235 or signals corresponding to movement of the remote controller 200, which is sensed by the sensor unit 240, to the display device 100 through the wireless communication unit 225.

Figs. 3A to 3C are views for explaining methods of controlling the display device through the remote controller according to embodiments.

Fig. 3A exemplarily illustrates that a pointer 205 corresponding to the remote controller 200 is displayed on the display unit 180.

The user may move the remote controller 200 vertically and horizontally, or rotate it. The pointer 205 displayed on the display unit 180 of the display device corresponds to movement of the remote controller 200. Such a remote controller 200 may be referred to as a spatial remote controller, since a corresponding pointer 205 is moved and displayed according to movement in three-dimensional space as shown in the drawing.

Fig. 3B exemplarily illustrates that, when the user moves the remote controller 200 left, the pointer 205 displayed on the display unit 180 of the display device moves left accordingly.

Information on the movement of the remoter controller 200, which is sensed through a sensor of the remote controller 200, is transmitted to the display device. The display device may calculate a coordinate of the pointer 205 from information on the movement of the remote controller 200. The display device may display the pointer 205 so as to correspond to the calculated coordinate.

Fig. 3C exemplarily illustrates the case where the user moves the remoter controller 200 away from the display unit 180. Due to this, a selection area corresponding to the pointer 205 in the display unit 180 is zoomed in and displayed as enlarged.

On the contrary, when the user moves the remote controller 200 close to the display unit 180, the selection area corresponding to the pointer 205 in the display unit 180 is zoomed out and displayed as contracted.

On the other hand, when the remote controller 200 is moved far away from the display unit 180, the selection area may be zoomed out, and, when the remote controller 200 is moved close to the display unit 180, the selection area may be zoomed in.

In addition, under a state where a specific button in the remote controller 200 is being pressed, recognition of vertical and horizontal movements may be excluded. That is, when the remote controller 200 moves away or close to the display unit 180, vertical and horizontal movements are not recognized and only back and forth movement may be recognized. Under a state where the specific button in the remote controller 200 is not being pressed, only the pointer 205 moves according to vertical and horizontal movements of the remote controller 200.

Furthermore, a moving speed and direction of the pointer 205 may correspond to a moving speed and direction of the remote controller 200.

On the other hand, a pointer described herein means an object that is displayed on the display unit 180 in correspondence to an operation of the remote controller 200. Accordingly, various shapes of the object may be available besides an arrow shape shown in the drawing as the pointer 205. For example, the object may have a concept including a point, cursor, prompt, or thick outline. In addition, the pointer 205 may be displayed correspondingly not only to any one point on among horizontal axes and vertical axes on the display unit 180 but also to a plurality of points such as a line or surface.

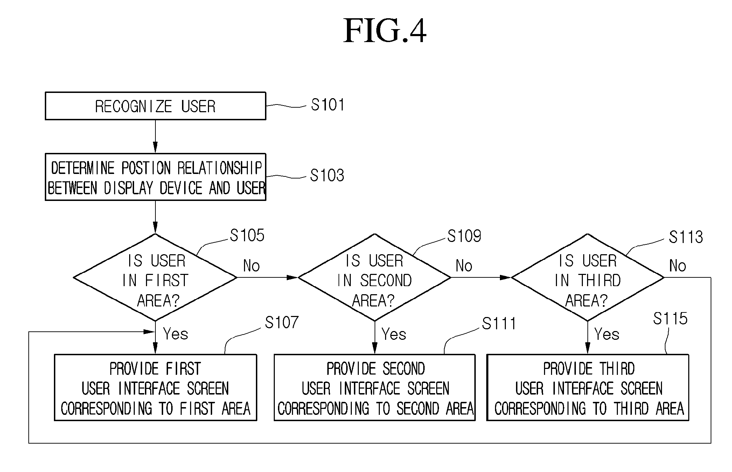

Next, an operating method of the display unit 100 according to an embodiment is described with reference to Fig. 4.

Fig. 4 is a flowchart for explaining an operating method of the display unit according to an embodiment.

Hereinafter, the operating method of the display device according to an embodiment is described in association with content of Figs. 1 to 3.

The user recognition unit 171 of the display device 100 recognizes the user positioned in the front of the display unit 100 (operation S101).

The front of the display device 100 may correspond to a surface displaying an image through the display unit 180.

In an embodiment, the user recognition unit 171 may recognize whether a user positioned in the front of the display device 100 exists. The user recognition unit 171 may be disposed in a top portion of the display device 100, but is not limited hereto and may be disposed in a left, right, or bottom portion.

In an embodiment, the user recognition unit 171 may include a camera for recognizing existence of the user. When the user recognition unit 171 includes the camera, the user recognition unit 171 may recognize existence of the user by using an image of the user captured through the camera.

In another embodiment, the user recognition unit 171 may include a human body sensor for recognizing existence of the user. The human body sensor may be a passive infrared ray (PIR) sensor. When the user recognition unit 171 includes the human body sensor, the existence of the user may be recognized by using an infrared ray.

The control unit 170 of the display device 100 may determine position relationship between the recognized user and the display device 100 (operation S103).

In another embodiment, the controller 170 may determine the position relationship between the user and the display device 100 on the basis of a distance between the recognized user and the display device 100.

In detail, the controller 170 may measure the distance between the user and the display device 100 by using an infrared ray emitted from the user recognition unit 171. That is, the infrared ray emitted from the user recognition unit 171 may be reflected by the user, and the control unit 170 may detect the reflected infrared ray and measure the distance between the user and the display device 100.

In an embodiment, the distance between the user and the display device 100 may be measured through any one of a triangulation scheme and a time of flight (TOF) scheme.

The control unit 170 may measure an angle that the user and the display device 100 make on the basis of the captured user image. The control unit 170 may determine whether the user is positioned in the front or in the side of the display device 100 on the basis of the measured angle that the user and the display device 100 make.

In another embodiment, the control unit 170 may determine the position relationship between the user and the display device 100 on the basis of the distance and angle between the user and the display device 100.

The control unit 170 of the display device 100 may determine that the user is in a first area on the basis of the determined position relationship between the user and the display device 100 (operation S105).

In an embodiment, the first area may be an area that represents a position of a user, which is required for providing a first user interface screen by the display device 100.

In an embodiment, the control unit 170 may determine that the user is in the first area when the position relationship between the user and the display device 100 is that the distance between them is greater than a preset first reference distance and the angle between them is within a reference angle range.

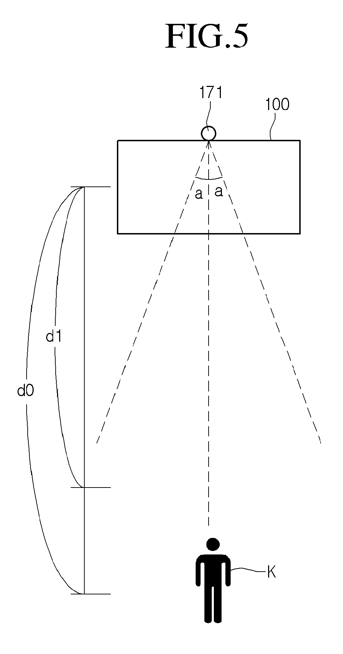

Regarding this is descried with reference to Fig. 5.

Fig. 5 is a view for explaining a situation where the user is in the first area according to an embodiment.

Referring to Fig. 5, when the distance d0 between the user K and the display device 100 is greater than the first reference distance d1, the control unit 170 may determine that the user is in the first area.

In another embodiment, when the distance d0 between the user K and the display device 100 is greater than the first reference distance d1 and the angle between them is smaller than a reference angle a, the control unit 170 may determine that the user is in the first area.

The first reference distance and the reference angle may be preset values for discriminating the first area from a second area.

The reference angle may be an angle that is a reference for differentiating which direction the user is in on the basis of a position of the display device 100. In an embodiment, when the angle between the user and the display device 100 is greater than the reference angle, the control unit 170 may determine that the user is in the left side or right side.

When the angle between the user and the display device 100 is smaller than the reference angle, the control unit 170 may determine that the user is in the front of the display device 100.

The content of Fig. 4 is described again.

When the user is in the first area, the control unit 170 provides the first user interface screen corresponding to the first area through the display unit 180 (operation S107).

In an embodiment, the first user interface screen may be a user interface screen having a form proper for a user to control operation of the display device 100 through the remote controller 200. That is, the first user interface screen may be a screen optimized to control the operation of the display device 100 through the remote controller 200, since the operation of the display device 100 is difficult to control through a gesture or touch of the user when the distance between the user and the display device 100 is distant or the user is in the side of the display device 100.

In an embodiment, when the user is determined to be in the first area, the control unit 170 may further display a first notification window notifying, on the first user interface screen, that the user is in the first area.

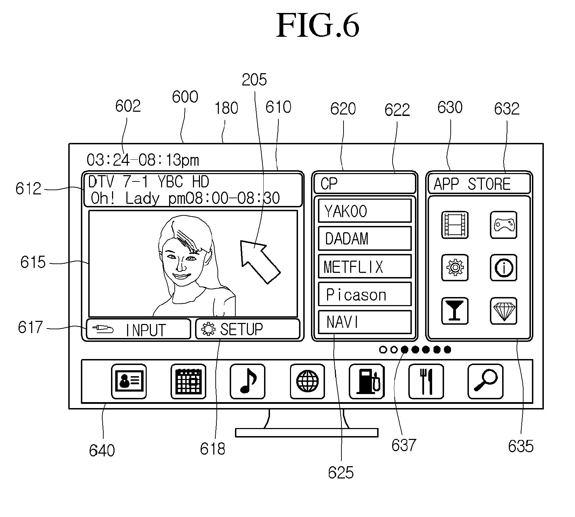

Description about the first user interface screen is provided with reference to Fig. 6.

Fig. 6 shows an exemplary first user interface according to an embodiment.

When the user is in the first area, the display device 100 may display the first user interface screen 600 corresponding to the first area.

The first user interface screen 600 may be an example of a basic screen configuration of the display device 100, and such a screen may be displayed as an initial screen when the power is turned on or when the screen is turned on in a standby mode or displayed as a basic screen when an input through a local key (not shown) or a home key included in the remote controller 200 is received.

Referring to Fig. 6, the first user interface screen 600 may include a plurality of sub-screens.

The first user interface screen 600 may include a sub screen (BROADCAST) 610 displaying a broadcast image, a sub screen (CP) 630 displaying a list of content providers (CPs), a sub screen (APP STORE) 630 displaying an application provision list, and a sub screen 640 displaying an application list.

In addition, in the drawing, as a sub screen not displayed on the display unit 180 but disposed in a hidden area, and replaced to be displayed during movement of the sub screen, there are prepared more sub screens including a sub screen (CHANNEL BROWSER) displaying a thumbnail list of images related to broadcast channels, a sub screen (TV GUIDE) displaying a broadcast guide list, a sub screen (RESERVATION/REC) displaying a broadcast reserve list or record list, a sub screen (MY MEDIA) displaying a media list in the display device or in a device connected to the display device, or a sub screen (TV GUIDE2) displaying a broadcast guide list.

The sub screen (BROADCAT) 610 displaying the broadcast image may include a broadcast image 615 received through the tuner 131 or the network interface unit 133, an object 612 displaying corresponding broadcast image related information, an object 617 displaying an external device, and a setup object 618.

The broadcast image 615 is displayed as a sub screen, and a size thereof may be fixed by a lock function thereof. Accordingly the user may view the broadcast image continuously.

The broadcast image 615 is resizable by manipulation by the user. For example, the size of the corresponding broadcast image 615 may be enlarged or contracted by a drag using the pointer 205 of the remote controller 200. Due to such enlargement or contraction, the number of sub screens displayed on the display unit 180 may be 2 or 4, not 3 as shown in the drawing.

Furthermore, when the broadcast image 615 in the sub screen is selected, the corresponding broadcast image may be displayed in full screen of the display unit 180.

The object 612 displaying information related to the corresponding broadcast image may include a channel number DTV7-1, a channel name YBC HD, a broadcast program name Oh! Lady, and a broadcast time (pm 08:00 to 08: 50), etc. Accordingly, the user may know intuitively information on the displayed broadcast image 615.

When selecting the object 612 displaying the corresponding broadcast image related information, related electronic program guide (EPG) information may be displayed on the display unit 180.

On the other hand, an object 602 displaying a date (03. 24), a day (THU), and current time (pm 08:13) may be displayed on the sub screen 610 displaying the broadcast image. Accordingly, the user may know intuitively time information.

The object 617 displaying the external device may display external devices connected to the display device 100. For example, during selection of the corresponding object 617, a list of external devices connected to the display device 100 may be displayed.

The setup object 618 may be used for inputting various settings of the display device 100. For example, various settings may be performed which includes image setting, audio setting, screen setting, reservation setting, pointer setting of the remote controller 200, or network setting.

On the other hand, the sub screen 620 displaying a content provider (CP) list may include a sub screen name 622 and a CP list 625. In the drawing, as the content providers in the CP list 625, Yakoo, Metflix, weather.com, Picason, and My tube are exemplified but various settings are available.

When the sub screen name 622 is selected, the corresponding sub screen 620 may be displayed on the display unit 180 in full screen.

In addition, when a predetermined content provider in the content provider list 625 is selected, a screen including a content list provided by the selected content provider may be displayed on the display unit 180.

The sub screen 630 displaying the application provision list for purchasing applications may include the sub screen name (APP STORE) 632 and the application list 635. The application list 635 may be a list classified and arranged for each item in an application store. In the drawing, the list is arranged and displayed in hot or new order, but is not limited hereto and various examples are available.

When the sub screen name 632 is selected, the corresponding sub screen 630 may be displayed on the display unit 180 in full screen.

Furthermore, when a predetermined application item in the application list 635 is selected, a screen providing information on the corresponding application may be displayed on the display unit 180.

An object 637 representing the number of total sub screens may be displayed on the bottom portions of the sub screens 620 and 630. The object 637 may represent not only the number of the total sub screens, but also the number of sub screens displayed on the display unit 180 among the total sub screens.

The sub screen 640 representing the application list may include a plurality of applications.

In an embodiment, the sub screen 640 representing the application list may include a list of applications set as favorites by the user.

In another embodiment, the sub screen 640 representing the application list may include a list of applications set by default.

In an embodiment, the pointer 205 moved correspondingly to movement of the remote controller 200 may be displayed on the first user interface screen 600.

The pointer 205 may be used to control a function of the display device 100 such as selecting or executing applications, content providers, or a menu displayed on the first user interface screen 600.

Description is provided again in relation to Fig. 4.

If the user is not in the first area, the control unit 170 determines that the user is in the second area (operation s109). When the user is in the second area, the control unit 170 provides a second user interface screen corresponding to the second area through the display unit 180 (operation S111).

In an embodiment, the second area may be a area displaying the user position, which is required by the display device 100 to provide the second user interface screen to the user.

In an embodiment, when the distance between the user and the display device 100 is smaller than the preset first reference distance and greater than a second reference distance, the control unit 170 may determine that the user is in the second area.

In another embodiment, when, in the position relationship, the distance between the user and the display device 100 is smaller than the preset first reference distance and greater than the second reference distance, and the angle between them is within the reference angle range, the control unit 170 may determine that the user is in the second area.

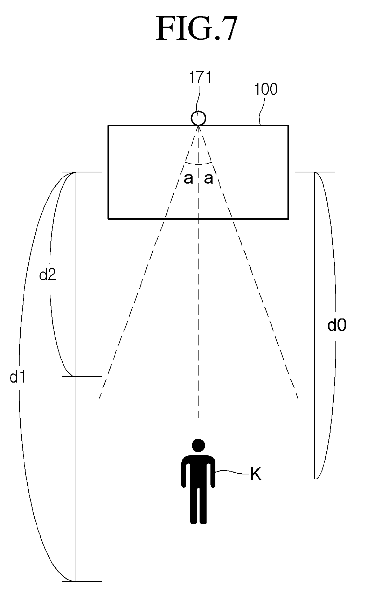

Description about this is provided with reference to Fig. 7.

Fig. 7 is a view for explaining a situation where the user is in the second area according to an embodiment.

Referring to Fig. 7, when the distance d0 between the user K and the display device 100 is smaller than the first reference distance d1 and greater than the second reference distance d2, the control unit 170 may determine that the user is in the second area.

In another embodiment, when the distance d0 between the user K and the display device 100 is smaller than the first reference distance d1 and greater than the second reference distance d2, and the angle between them is smaller than the reference angle a, the control unit 170 may determine that the user is in the second area.

The second reference distance may be a preset value for discriminating the second area and a third area. As described above, the second area may be a area indicating the user position, which is required by the display device 100 to provide the second user interface screen to the user. The third area, as will be described later, may be a area indicating the user position required by the display device 100 to provide a third user interface screen to the user.

The reference angle may be an angle that is a reference for discriminating which direction the user is in on the basis of the position of the display device 100. In an embodiment, when the angle between the user and the display device 100 is greater than the reference angle, the control unit 170 may determine that the user is in the left side or right side.

When the angle between the user and the display device 100 is smaller than the reference angle, the control unit 170 may determine that the user is in the front of the display device 100.

When the user is determined as being in the second area on the basis of the position relationship between the determined user K and the display device 100, the control unit 170 may provide the second user interface screen corresponding to the second area.

In an embodiment, when the user is determined to be in the second area, the control unit 170 may further display a second notification window notifying, on the second user interface screen, that the user is in the second area.

In an embodiment, the second user interface screen may be a user interface screen having a form proper for a user to control operation of the display device 100 through his/her gesture. That is, the second user interface screen may be a screen optimized to control the operation of the display device 100 through user's gesture, when the distance between the user and the display device 100 is smaller than the first reference distance and greater than the second reference distance.

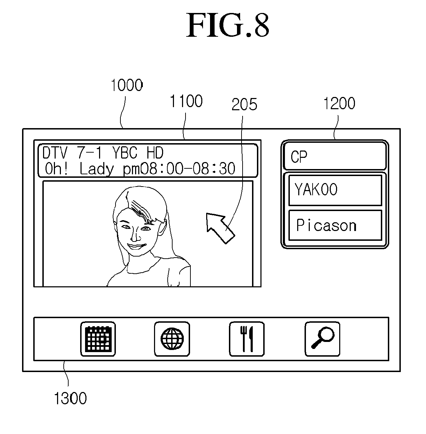

Description about the second user interface screen is provided with reference to Fig. 8.

Fig. 8 illustrates an exemplary second user interface screen according to an embodiment.

When the user is in the second area, the display device 100 may display the second user interface screen 1000 corresponding to the second area.

In an embodiment, the second user interface screen 1000 may be a screen that some of a plurality of sub screens configuring the first user interface screen 600 described in relation to Fig. 6 are omitted. In detail, the second user interface screen 1000 may be a screen that a size of a area formed by each of rest of the plurality of sub screens except the sub screens omitted from the first user interface screen 600 is larger than that of the first user interface screen 600.

Referring to Fig. 8, the second user interface screen 1000 may include a sub screen 1100 displaying a broadcast image, a sub screen 1200 displaying a content provider list, and a sub screen 1300 displaying an application list. That is, the second user interface screen 1000 may not include a sub screen 630 displaying an application provision list in comparison with the first user interface screen 600.

Each size of the sub screen 1100 displaying the broadcast image, the sub screen displaying the content provider list, and the sub screen 1300 displaying the application list, which configure the second user interface screen 1000, may be larger than that of each of the sub screen 610 displaying the broadcast image, the sub screen 620 displaying the content provider list, and the sub screen 640 displaying the application list, which configure the first user interface screen 600.

In addition, the number of items included in each of the sub screen 1200 displaying the content provider list and the sub screen 1300 displaying the application list may be smaller than that of each of the sub screen 620 and the sub screen 640 displaying the application list of the first user interface screen 600. Here, the item may correspond to the content provider, the application or the menu. A size of items configuring the sub screens of the second user interface screen 1000 may be larger than that of items configuring the first user interface screen 600. In an embodiment, when a screen that the display device 100 displays according to the position relationship of the user is changed from the first user interface screen 600 into the second user interface screen 1000, the control unit 170 of the display unit 100 may automatically record a broadcast image being played in the sub screen 1100. When the second user interface screen 100 is changed into the first user interface screen 600 or a third user interface screen 700 to be described later, the control unit 170 of the display device 100 may cancel the recording of the corresponding broadcast image.

In another embodiment, when a screen displayed by the display device 100 is changed from the first user interface screen 600 into the second user interface screen 1000, the control unit 170 may change a size of the pointer 205. In detail, when the screen displayed by the display device 100 is changed from the first user interface screen 600 into the second user interface screen 1000, the control unit 170 may reduce the size of the pointer 205. That is, the size of the pointer 205 displayed on the second user interface screen 1000 may be smaller than that of the pointer 205 displayed on the first user interface screen 600. In this case, since the user in the second area is closer to the display device 100 than a case of being in the first area, the control unit 170 reduces the size of the pointer 205 and allows the user to more easily control the functions of the display device 100.

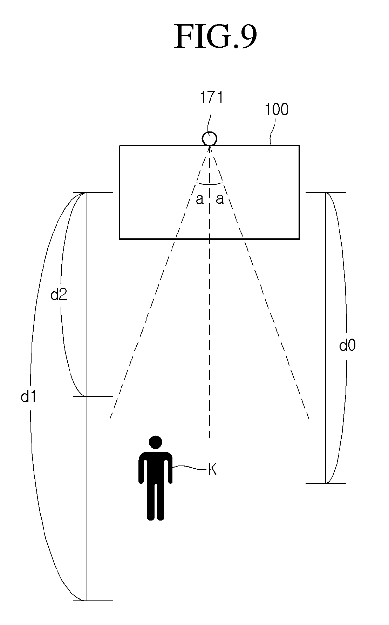

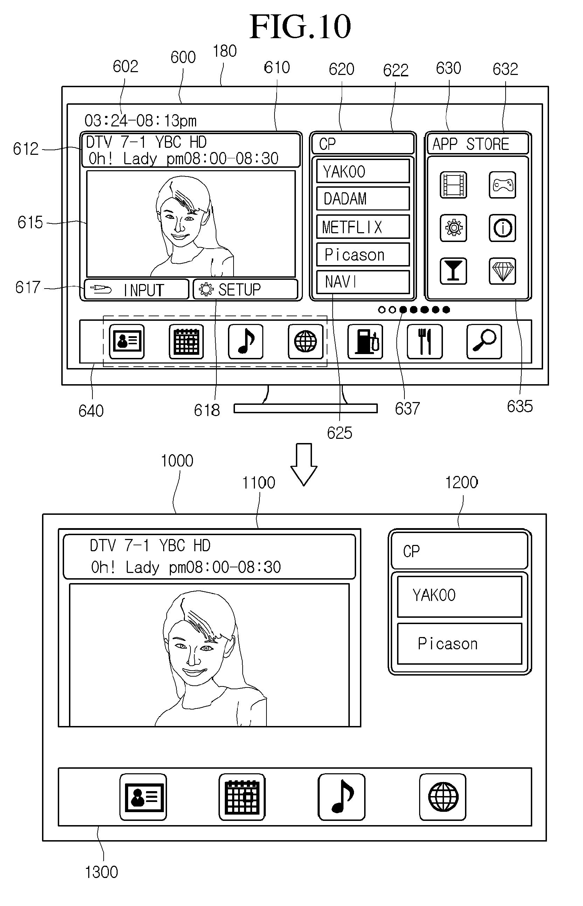

In another embodiment, when a screen displayed by the display device 100 is changed from the first user interface screen 600 into the second user interface screen 1000 according to the position relationship between the user and the display device 100, the control unit 170 of the display device 100 may change the size of specific items included in the sub screens on the basis of the position relationship between the user and the display device 100. Description about this is provided with reference to Figs. 9 and 10.

Fig. 9 is a view for explaining the case where the user is in the second area and the left side of the screen displayed on the display device according to another embodiment. Fig. 10 illustrates the second user interface screen displayed when the user is in the second area and the left side of the screen displayed on the display device.

First, referring to Figs. 9 and 10, when the user K is in the second area and the left side of the display device 100, the control unit 170 may change a screen displayed from the first user interface screen 600 to the second user interface 1000 and at the same time, display only items located in the left side of the center of the display device 100 from among items displayed on the sub screen 640 of the first user interface screen 600 shown in Fig. 6.

In an embodiment, items displayed on the sub screen 1300 of the second user interface screen 1000 may be items displayed on the basis of preference and past use history of the user. That is, the control unit 170 may display only some items by reflecting the preference and past use history of the user for the items configuring the user interface screen.

Description is provided again in relation to Fig. 8.

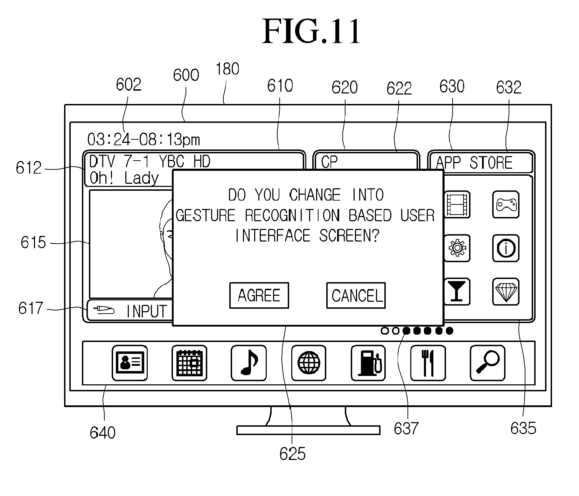

When the user position is changed from the first area into the second area, the control unit 170 may display a screen change notification window notifying a screen change before automatically changing the screen displayed from the first user interface screen 600 into the second user interface screen 1000. Description about this is provided with reference to Fig. 11.

Fig. 11 is a view for explaining an example that a screen change notification window is displayed according to a change of the position relationship between the user and the display device according to an embodiment.

Referring to Fig. 11, when the user position is changed from the first area into the second area, the display device 100 may display the screen change notification window 670 before the change of the user interface screen. When a user input agreeing with the screen change notification window is received, the display device 100 may display the second use interface screen 1000 illustrated in Fig. 8.

When the user position is changed from the first area to the third area and from the second area to the third area, the above-described screen change notification window may also be displayed before the change of the user interface screen.

Description is provided again in relation to Fig. 8.

When the user position is changed from the first area into the second area, the display device 100 may display the second user interface screen 1000 in a fixed type.

When the user position is changed from the first area into the second area, the display device 100 may not display the second user interface screen 1000 in the fixed type. In detail, when the user position is changed from the first area into the second area, a configuration type of the displayed second user interface screen 1000 may be differed. The display device 100 may display the items included in the sub screens 1200 and 1300 of Fig. 8 according to user preference. For example, when the user's screen is changed from the second user interface screen 1300 into the first user interface screen 600 and changed again into the second user interface screen 1000 according to the position relationship between the user and the display device 100, items included in the sub screen 1300 of the existing second user interface screen 1000 and items included in the sub screen 1300 of the new second user interface screen 1000 may be different from each other. That is, the items included in the sub screen 1300 of the new second user interface screen 100 may be items that the user preference is reflected.

Description is provided again with reference to Fig. 4.

When the user is not in the first and second areas, the control unit 170 determines that the user is in the third area (operation S113), and when the user is in the third area, the control unit 170 provides the third user interface screen corresponding to the third area through the display unit 180 (operation S115).

In an embodiment, the third area may be a area where the display unit 100 represents the user position required to provide the third user interface screen to the user.

In an embodiment, when the position relationship between the user and the display device 100 has a distance smaller than the preset second reference distance, the control unit 170 may determine that the user is in the third area.

In another embodiment, when the position relationship between the user and the display device 100 has a distance smaller than the preset second reference distance and an angle within a reference angle range, the control unit 170 may determine that the user is in the third area.

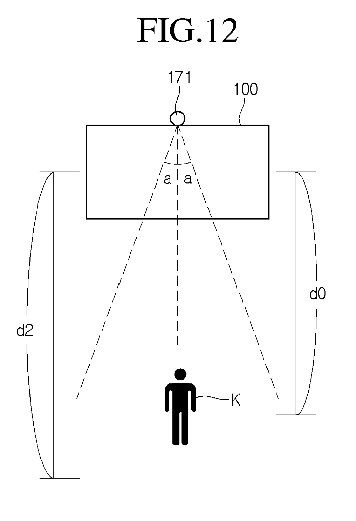

Description about this is provided with reference to Fig. 12.

Fig. 12 is a view for explaining a situation where the user is in the third area according to an embodiment.

Referring to Fig. 12, the distance d0 between the user K and the display device 100 is smaller than the second reference distance d2, the control unit 170 may determine that the user is in the third area.

When the distance d0 between the user K and the display device 100 is smaller than the second reference distance d2, and the angle between the user K and the display device 100 is smaller than a reference angle a, the control unit 170 may determine that the user is in the third area.

The second reference distance may be a preset value for discriminate the second and third areas from each other. The reference angle may be an angle that is a reference for discriminating which direction the user is in on the basis of the position of the display device 100.

In an embodiment, when the angle between the user and the display device 100 is greater than the reference angle, the control unit 170 may determine that the user is in the left side or right side of the display device 100.

When the angle between the user and the display device 100 is smaller than the reference angle, the control unit may determine that the user is in the front of the display device 100.

When the user is determined as being in the third area on the basis of the position relationship between the determined user K and the display device 100, the control unit 170 may provide the third user interface screen corresponding to the third area.

In an embodiment, when the user is determined as being in the third area, the control unit 170 may further display, on the third user interface screen, a third notification window notifying that the user is in the third area.

The third user interface screen may be a user interface screen in a type that is proper for the user to control the operation of the display device 100 through touch inputs. That is, when the user is close to the display device 100, it may be difficult to control the operation of the display device 100 and accordingly the third user interface screen may be a screen optimized to control the operation of the display device 100 through the user's touch inputs.

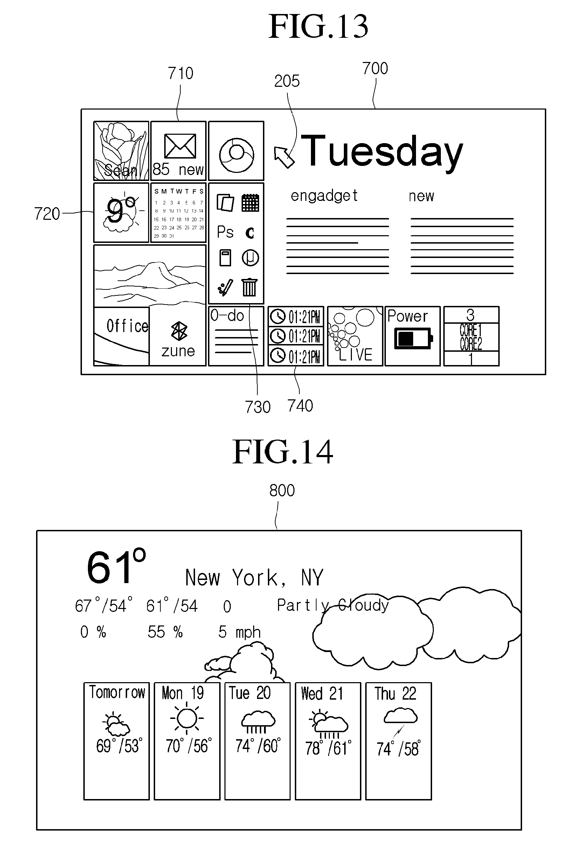

In another embodiment, when the position relationship between the user and the display device 100 has a distance smaller than the preset second reference distance, and the user's touch inputs are received, the control unit 170 may determine that the user is in the third area and accordingly provide the third user interface screen. The third user interface screen is described with reference to Figs. 13 to 20.

Figs. 13 to 20 illustrate the exemplary third user interface screens according to an embodiment.

When the user is in the third area, the display device 100 may display the third user interface screen 700 corresponding to the third area.

Icons provided on the third user interface screen 700 may have a larger size and simpler shape than sub screens and items provided on the first and second user interface screens 600 and 1000 for easy touch inputs, when the distance between the user and the display device 100 is relatively closer.

For example, as shown in Fig. 13, each of an email icon 710 related to an email, a weather icon 720 informing weather, an application list icon 730 including a plurality of application lists, and a time icon 740 informing current time may have a large size and a simple shape in order to make touch inputs by the user easy.

In addition, on the third user interface screen 700, icons capable of providing intuitive information to the user such as preferred channels, recommended VOD, weather, and simple news may be provided rather than a menu such as an app store which has lots of content to be viewed for a long time and selected.

When the user selects the weather icon 720, the display device 100, as shown in Fig. 14, may provide a widget providing information on the weather.

That is, when a user's touch input on the weather icon 720 is received, the display device 100 may provide a widget providing detailed information on weather as shown in the user screen of Fig. 14.

In an embodiment, when the screen displayed on the display device 100 is changed from the second user interface screen 1000 into the third user interface screen 700 or from the first user interface screen 600 into the third user interface screen 700, the control unit 170 may change the size of the pointer 205. In detail, when the screen displayed on the display device 100 is changed from the second user interface screen 1000 into the third user interface screen 700, the control unit 170 may reduce the size of the pointer 205. That is, the size of the pointer 205 displayed on the third user interface screen 700 may be smaller than that displayed on the second user interface screen. In this case, since the user in the third area is closer to the display device 100 than in the second area, the control unit reduces the size of the pointer 205 and allows the user to more easily control functions of the display device 100.

In another embodiment, when the screen displayed on the display device 100 is changed into the third user interface screen 700, the control unit may allow the pointer 205 to disappear. When the screen displayed on the display device 100 is changed into the third user interface screen 700, the pointer 205 may not be displayed.

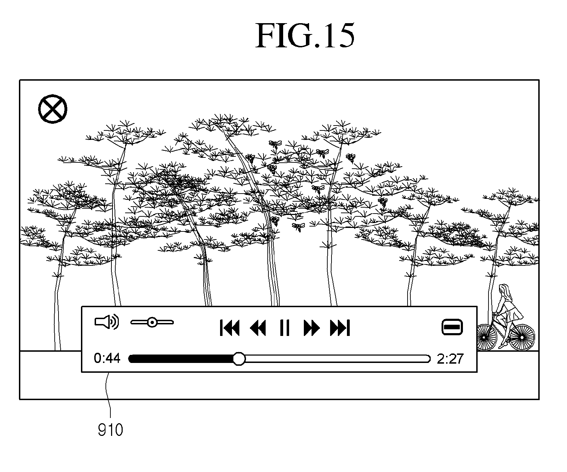

Next, description is provided with reference to Fig. 15.

Fig. 15 illustrates an exemplary third user interface screen provided to the user when the user is viewing a VOD.

Referring to Fig. 15, when the user in the third area is viewing the VOD and performs touch inputs, the display device 100 may display a side bar 910 allowing the user to control VOD viewing functions. The user may view the VOD in a desired method by selecting a plurality of functions for controlling the VOD playback, which are included in the side bar 910, through touches.

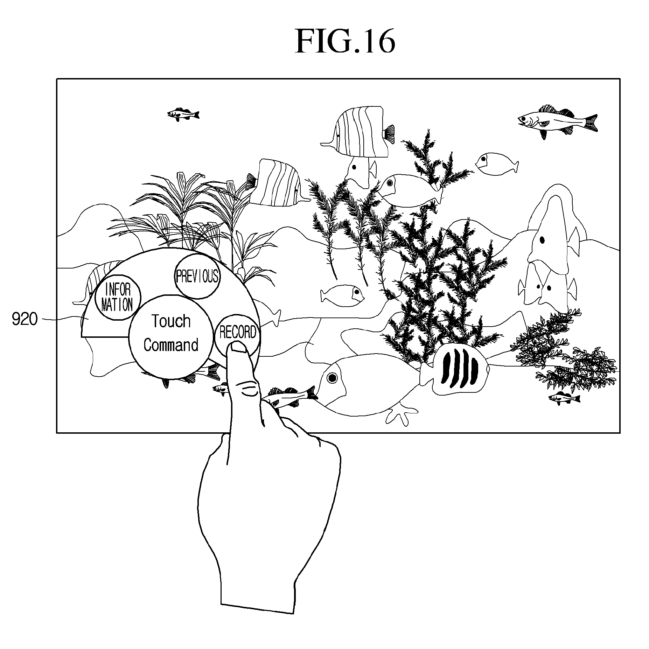

Next, description is provided with reference to Fig. 16.

Fig. 16 illustrates an exemplary third user interface screen provided to the user when viewing a broadcast program.

Referring to Fig. 16, when the user in the third area is viewing the broadcast program and performs touch inputs, the display device 100 may display a control button area 920. The user may select a plurality of functions included in the control button area 920 through touches and obtain or store information on the broadcast program. For example, the control button area 920 may include an information button for providing detailed information on and broadcast time of a corresponding broadcast program, a channel button for changing a broadcast channel, and a recording button for recording the corresponding broadcast program.

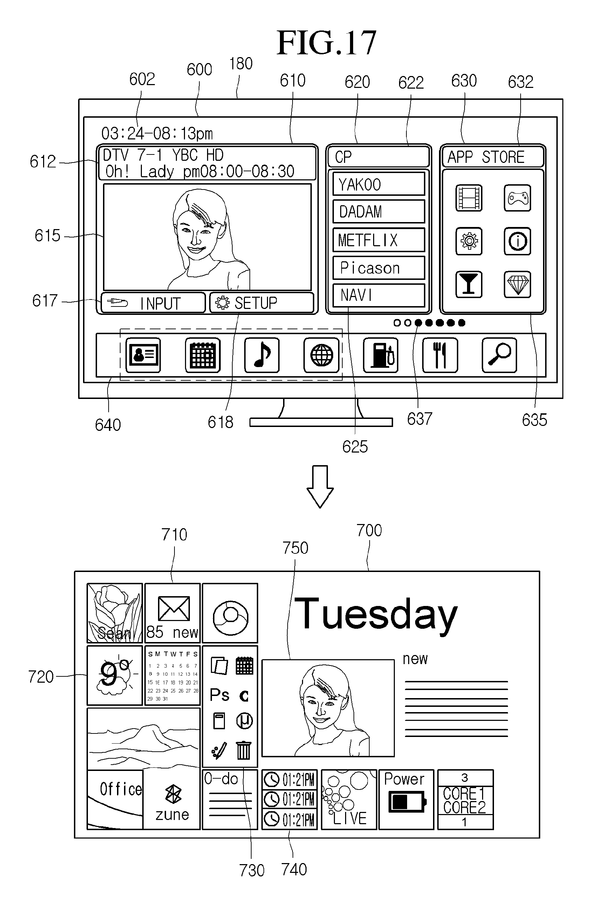

Next, description is provided with reference to Fig. 17. For description about Fig. 17, Fig. 12 is also referred.

In an embodiment, when the user interface screen is changed from the first user interface screen 600 into the third user interface screen 700, the control unit 170 of the display device 100 may change a position at which an image of media content being played is displayed on the basis of the position relationship between the user and the display device 100. The image of media content may be a broadcast image that the user is viewing.

For example, when a position of the user K is changed from the first area to the third area, the user interface screen, as shown in Fig. 17, may be changed from the first user interface screen 600 into the third user interface screen 700. In addition, when the user K is in the third area and in a center side of the display device 100, a broadcast image being played on the sub screen 610 of the first user interface screen 600 may be moved to the center of the display device 100. That is, a position of the sub screen 610 of the first user interface screen 600 may be changed into a position of the sub screen 750 of the third user interface screen 700 as shown in Fig. 17. In addition, in this case, the control unit 170 of the display device 100 may control the audio output unit 185 so that a volume size of the broadcast image is reduced. In addition, the control unit 170 may adjust brightness of the sub screen 750 located in the center side of the display device 100 brighter than any other portions or entirely reduce the brightness of the third user interface screen 700.

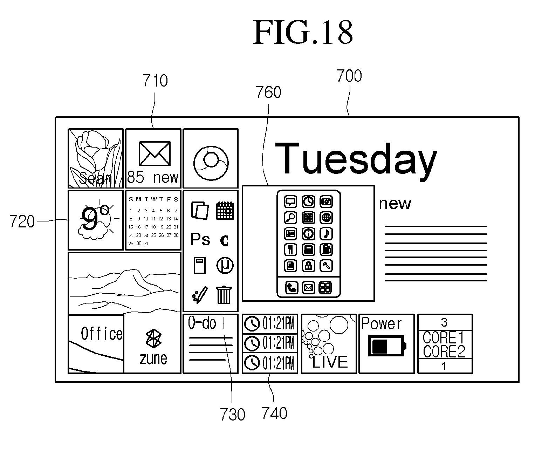

Next, description is provided with reference to Fig. 18. For description about Fig. 18, Fig. 12 is also referred.

In an embodiment, when the display device 100 and a mobile terminal of the user K are interacted and the user K is in the third area, the third user interface screen 700 may include information on the mobile terminal. That is, when the user screen of the display device 100 is changed into the third user interface screen, the display device 100 may receive the mobile terminal information and display the received mobile terminal information on a area of the third user interface screen 700.

Referring to Fig. 18, when the display device 100 and a mobile terminal of the user K are interworked and the user K is in the third area, the control unit 170 may receive the mobile terminal information and display the received mobile terminal information on the sub screen 760 of the third user interface screen 700. Through this, the user may control an operation of the mobile terminal, and the controlled operation of the mobile terminal may also be performed in the mobile terminal of the user.

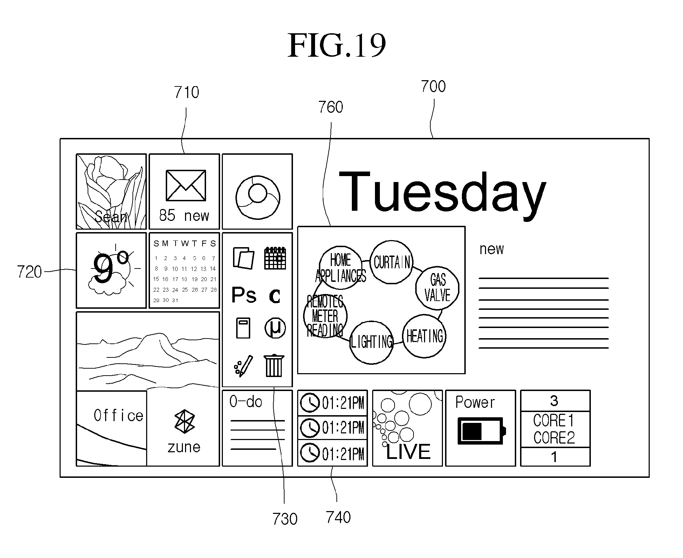

Next, description is provided with reference to Fig. 19.

Fig. 19 illustrates an example that the sub screen 770 for controlling a home network is provided in the third user interface screen 700.

When the user is determined as being in the third area, the display device 100 may provide the sub screen 770 for controlling a home network in the third user interface screen 700. In this case, the user may be in the third area and authorized. That is, when the user is in the third area and authorized for the home network control, the display device 100 may provide the sub screen 770 for controlling the home network in the third user interface screen 700.

The user may control operations of home appliances or a CCTV interworked with the display device 100 through a home network control screen provided in the third user interface screen 700.

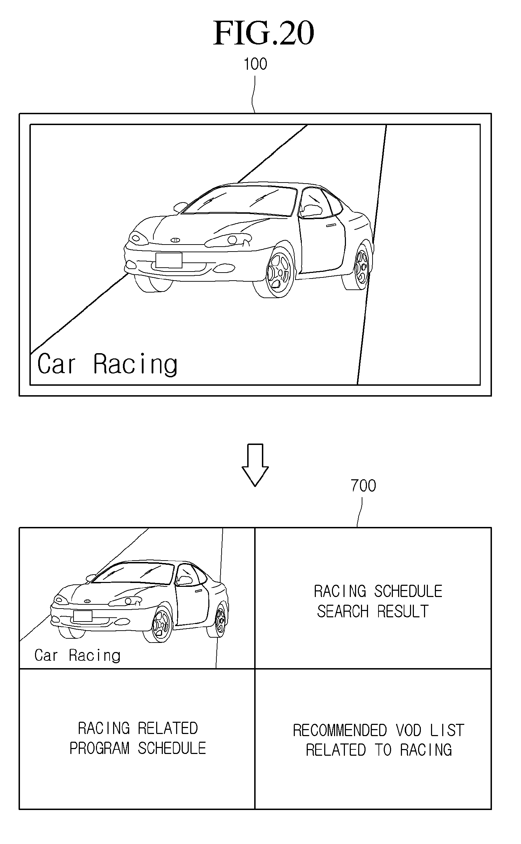

Next, description is provided with reference to Fig. 20.

Fig. 20 illustrates an example of the third user interface screen provided while media content is played.

A screen on which the display device 100 is playing media content may correspond to the first user interface screen.

Referring to Fig. 20, when the user is in the third area during playing the media content in full screen, the display device 100 may recognize information on the media content being played and provide information related to the recognized media content through the third user interface screen 700. For example, when the display device 100 is playing an image about car racing and the user is in the third area, the display device 100 may recognize <Car racing> displayed on the playback screen of the media content through an optical character reader (OCR) scheme, and provide information related to racing in the third user interface screen 700.

That is, the display device 100 may provide the third user interface screen 700 including a contracted image of media content being played, a racing schedule search result, a racing related program schedule, and a recommended VOD list related to racing on the basis of the OCR recognition result.

In such a way, the user may easily use functions of the display device 100 through the third user interface screen having various forms optimized to touches.

Description is provided again with reference to Fig. 4.

When the user is determined as not being in the first to third areas (operation S113), the control unit 170 provides the first user interface screen (operation 107).

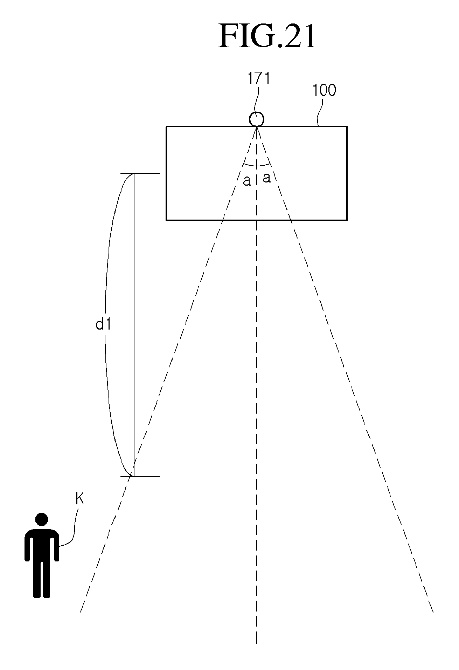

In an embodiment, the case where the user is not in the first to third areas may correspond to the case where the user is not in the front, but in the side of the display device 100. For example, when the angle between the user and the display device 100 is deviated from the reference angle a, the display device 100 may provide the first user interface screen shown in Fig. 6. Description about this is provided with reference to Figs. 21 to 23.

Figs. 21 to 23 are views for explaining situations where the user is not in the first, second, and third areas according to embodiments.

First, referring to Fig. 21, when the distance between the user and the display device 100 is greater than the first reference distance d1, and the angle between the user and the display device 100 is greater than the reference angle a, the display device 100 may determine that the user is not in any area of the first to third areas. In this case, the display device 100 may provide the first user interface screen having a type proper to control the operation of the display device 100 through the remote controller 200.

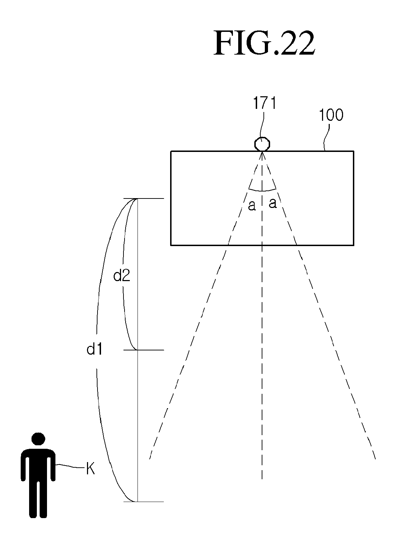

Similarly, referring to Fig. 22, when the distance between the user and the display device 100 is smaller than the first reference distance d1 and greater than the second reference distance d2, and the angle between the user and the display device 100 is greater than the reference angle a, the display device 100 may determine that the user is not in any area of the first to third areas. In this case, the display device 100 may provide the first user interface screen having the type proper to control the operation of the display device 100 through the remote controller 200.

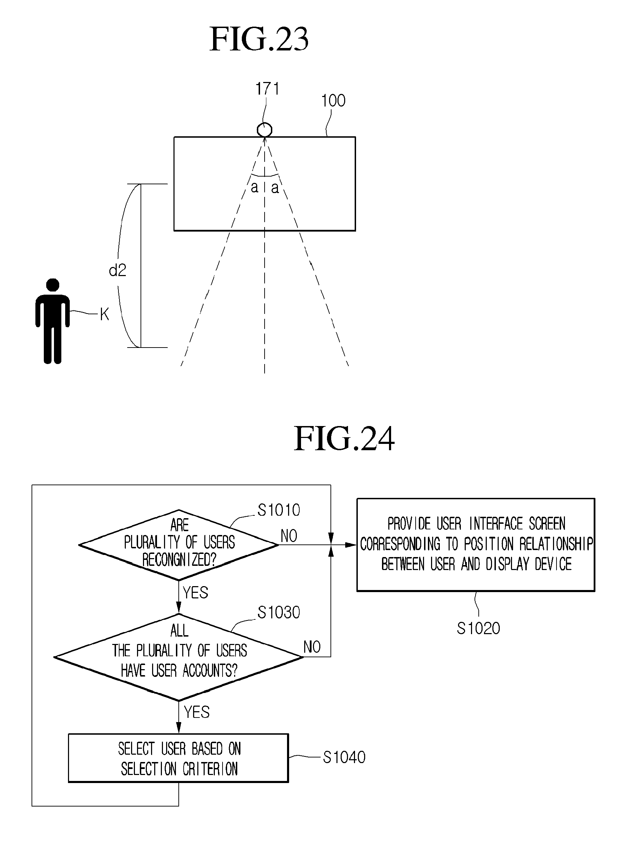

Similarly, referring to Fig. 23, when the distance between the user and the display device 100 is smaller than the second reference distance d2, and the angle between the user and the display device 100 is greater than the reference angle a, the display device 100 may determine that the user is not in any area of the first to third areas. In this case, the display device 100 may provide the first user interface screen having the type proper to control the operation of the display device 100 through the remote controller 200.

Description is provided again with reference to Fig. 4.

Figs. 4 to 20 are examples of the user interface screen provided according to the position relationship between the user and the display device 100. However, the user interface screen may be provided on the basis of a connection state with an external device which controls the operation of the display device 100.

Here, the external device may be any one of remote controller 200 or a keyboard, but is not limited hereto. The external device may be any one able to control the operation of the display device 100.

In an embodiment, when the external device, which transmits and receives information through wireless communication, is disconnected from the display device 100, the display device 100 may provide a gesture-based second user interface screen or a touch-based third user interface screen according to the position relationship between the display device 100 and the user. Through this, the user may effectively control the operation of the display device 100 through the gesture-based second user interface screen or the touch-based third user interface screen without using the external device such as the remote controller 200. For example, when the external device is a motion remote controller and the motion remote controller is not paired with the display device 100, the user interface screen may be converted into the gesture-based user interface screen or the touch-based user interface screen according to the position relationship between the user and the display device 100.

In another embodiment, when the external device which transmits and receives information through wireless communication, is connected to the display device 100, the user interface screen may not be converted regardless of the position relationship between the user and the display device 100. For example, when the external device is a motion remote controller and the motion remote controller is paired with the display device 100, the user interface screen may not be converted regardless of the position relationship between the user and the display device 100.

Next, the operation of the display device 100 is described with reference to Figs. 24 to 26, when a plurality of users exist.

Fig. 24 is a flowchart for explaining an operating method of the display device according to another embodiment.

In particular, Fig. 24 illustrates a detailed process of the user recognition (operation S101) of Fig. 4 and is a flowchart for explaining a method of providing the user interface screen when a plurality of users exist.

The control unit 170 determines that a plurality of users are in the front of the display device 100 through the user recognition unit 171 (operation S1010).

When only one user, not the plurality of users, is recognized, the control unit 170 provides the user interface screen corresponding to the position relationship between the recognized user and the display device 100 (operation S1020).

When the plurality of users are in the front of the display device 100, the control unit 170 may determine that user accounts respectively corresponding to the plurality of users exist (operation S1030).

When it is determined that only one of the plurality of users has the user account, the control unit 170 provides the user interface screen corresponding to the position relationship between the user having the user account and the display device 100 (operation S1020).

When all the plurality of users have user accounts, the control unit 170 selects any one user from among the plurality of users as a user for user interface screen conversion on the basis of a selection criterion (operation S1040).

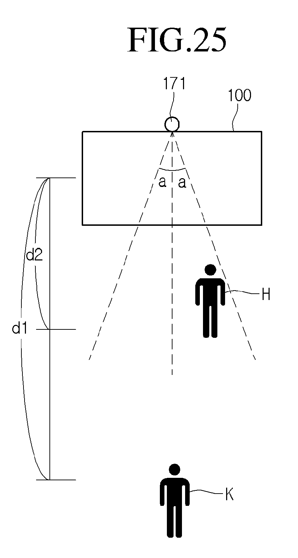

In an embodiment, the control unit 170 may select, as the user for user interface screen conversion, a user first recognized through the user recognition unit 171 from among the plurality of users. Description about this is provided with reference to Fig. 25.

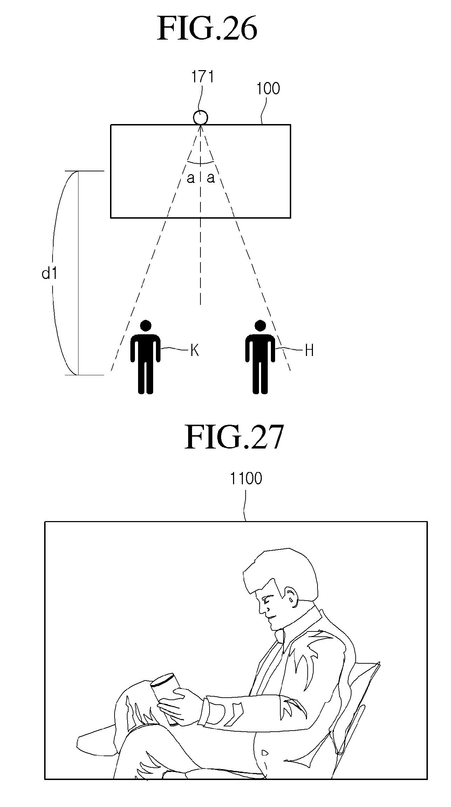

Figs. 25 and 26 are views for explaining the operation of the display device 100 when a plurality of users exist according to an embodiment.

Referring to Fig. 25, a first user K and a second user H are in the front of the display device 100.

In an embodiment, when the first user K is in the first area and the second user H is in the third area, the display device 100 may provide the user interface screen on the basis of a user firstly recognized through the user recognition unit 171 between two users. For example, when the second user H is recognized earlier than the first user K through the user recognition unit, the display device 100 may provide the third user interface screen corresponding to the third area in which the second user H is.

The case where the second user H is recognized earlier than the first user K through the user recognition unit may mean the case where the eyes of the second user H are fixed to the user recognition unit 171 for a predetermined time. For this, a known technology such as eye tracking may be employed.

Here, the predetermined time may be 5 seconds, which is only an example.

In another embodiment, the control unit 170 may select a user viewing the screen of the display device 100 from among the plurality of users as the user for user interface screen conversion.

Next, description is provided with reference to Fig. 26.

Fig. 26 illustrates an example that the plurality of users control the user interface screen according to an embodiment.

That is, according to an embodiment, when the plurality of users are in the front of the display device 100, each of the plurality of users may control the functions of the display device 100 through touch inputs on the third user interface screen.

Referring to Fig. 26, when the first user K and the second user H are in the first area, the display device 100 may provide the third user interface screen, receive touch inputs from each of the two users, and perform functions corresponding thereto.

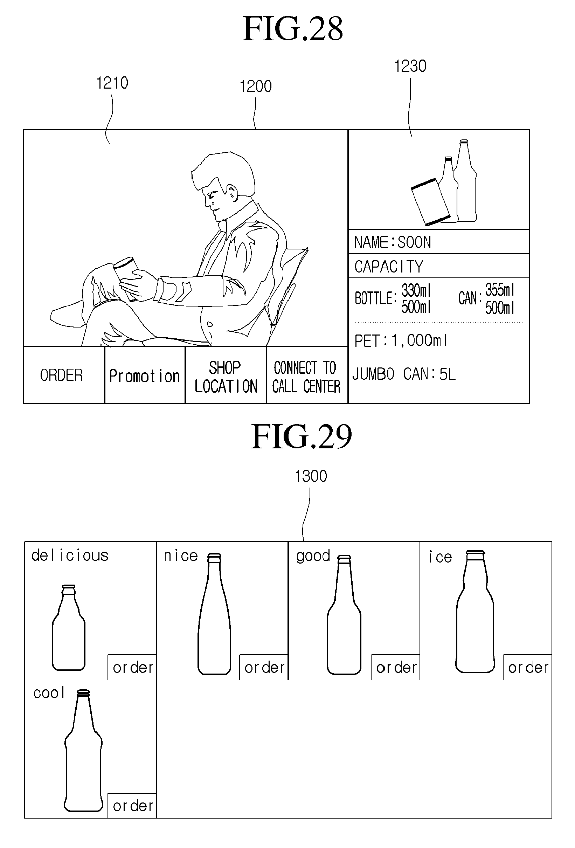

Next, referring to Figs. 27 to 29, when an advertisement image is played, an example that the user interface is converted according to the position relationship between the user and the display device is described.

In particular, Figs. 27 to 29 may be applied to a digital signage.

Fig. 27 illustrates a first user interface screen 1100, when the user is in the first area. The remoter controller-based first user interface screen 1100 shows that an advertisement image is played in full screen.

In this state, when the user position is changed from the first area into the second area, the display device 100 provides the gesture-based second user interface screen 1200. The second user interface screen 1200 may include a contracted advertisement image 1210, detailed information 1230 on a product promoted through the advertisement image, and a purchase information. The user may easily obtain information on the corresponding product and easily purchase the corresponding product through the second user interface screen 1200.

In this state, when the user position is changed from the second area into the third area, the display device 100 provides the touch-based third user interface screen 1300.

On the third user interface screen 1300, information on a plurality of products related to the product promoted through the advertisement image may be divided into a plurality of areas and provided. Each of the plurality of areas may display information corresponding to each of the plurality of products, and include an image, an advertising copy, and purchase information of a corresponding product.

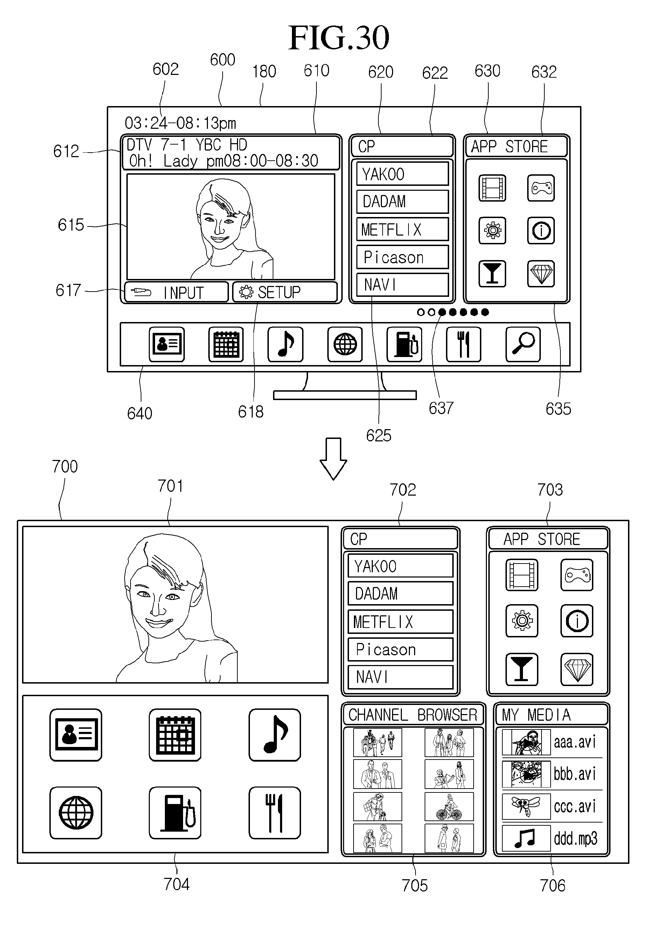

Fig. 30 is a view for explaining a third user interface screen according to another embodiment.

Referring to Fig. 30, when the user position is changed from the first area into the third area, the control unit 170 may change the display screen from the first user interface screen 600 into the third user interface screen 700.

The third user interface screen 700 may be disposed in a hidden area and include sub screens replaced and displayed during movement of the sub screens. That is, the third user interface screen 700 may be disposed in the plurality of sub screens and the hidden area included in the first user interface screen 600 and include the sub screens replaced and displayed during movement of the sub screens. The third user interface screen 700 may include a sub screen 701 displaying a broadcast image, a sub screen 702 displaying a content provider list, a sub screen 703 displaying an application provision list for purchasing applications, a sub screen 704 displaying a pre-installed application list, a sub screen (CHANNEL BROWSER) 705 including a thumbnail list related to broadcast channels, and a sub screen (MY MEDIA) 706 displaying a media content list in the display device 100 or in an external device connected to the display device 100. The sub screen (CHANNEL BROWSER) 705 including a thumbnail list related to broadcast channels, and the sub screen (MY MEDIA) 706 displaying a media content list in the display device 100 or in an external device connected to the display device 100 are the sub screens not displayed in the first user interface screen 600, but may be displayed in the third user interface screen 700 when conversion into the third use interface screen 700 is performed.

According to various embodiments, a user interface screen can be provided on the basis of the connection state to the external device controlling the operation of the display device 100.

According to an embodiment, the above-described method can also be embodied as processor readable codes on a program recorded medium. Examples of the processor readable recording medium include read-only memory (ROM), random-access memory (RAM), CD-ROMs, magnetic tapes, floppy disks, and optical data storage devices, and carrier waves (such as data transmission through the Internet).

The above-described display device is not that configurations and methods of the above-described embodiments are limitedly applied, but that overall or some of the embodiments can be combined and configured to allow various modifications to be made.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A display device comprising:
a display unit(180);
a user recognition unit(171) configured to recognize a user; and
a control unit (170)configured to control the display unit, the user recognition unit,
**characterized in that**
the control unit(170) provides a user interface screen corresponding to the position relationship between the recognized user and the display device through the display unit.

2. The display device according to claim 1, wherein the control unit measures a distance between the recognized user and the display device and provides the user interface screen on the basis of the measured distance.

3. The display device according to claim 2, wherein the control unit provides a remote controller-based first user interface screen for controlling an operation of the display device through the remote controller, when the distance between the recognized user and the display device is greater than a first reference distance.

4. The display device according to claim 3, wherein the control unit provides a gesture-based second user interface screen for controlling the operation of the display device through a gesture of the user, when the distance between the recognized user and the display device is smaller than the first reference distance and greater than a second reference distance.

5. The display device according to claim 4, wherein the control unit provides a touch-based third user interface screen through a touch of the user, when the distance between the recognized user and the display device is smaller than the second reference distance.

6. The display device according to claim 2, wherein the control unit provides the user interface screen on the basis of the measured distance and an angle that the user and the display device make.

7. The display device according to claim 6, wherein the controller provides a remote controller-based first user interface screen for controlling an operation of the display device, when the angle between the user and the display device is greater than a reference angle.

8. The display device according to claim 1, wherein the control unit provides the user interface screen on the basis of a connection state with a remote controller for controlling an operation of the display device.

9. The display device according to claim 8, wherein the control unit provides a touch-based third user interface screen, when the display device is disconnected from the remoter controller.

10. The display device according to claim 1, wherein the control unit displays, through the display unit, a notification window for notifying the position relationship between the user and the display device.

11. An operating method of a display device, comprising:
recognizing a user in front of the display device; and
providing a user interface screen corresponding to position relationship between the recognized user and the display device.

12. The operating method according to claim 11, further comprising measuring a distance between the recognized user and the display device, and
wherein the providing of the user interface screen comprises providing the user interface screen based on the measured distance.

13. The operating method according to claim 12, wherein the providing of the user interface screen based on the measured distance comprises providing a remote controller-based first user interface screen for controlling an operation of the display device through the remote controller, when the distance between the recognized user and the display device is greater than a first reference distance.

14. The operating method according to claim 13, wherein the providing of the user interface screen based on the measured distance comprises providing a gesture-based second user interface screen for controlling the operation of the display device through a gesture of the user, when the distance between the recognized user and the display device is smaller than the first reference distance and greater than a second reference distance.

15. The operating method according to claim 14, wherein the providing of the user interface screen based on the measured distance comprises providing a touch-based third user interface screen through a touch of the user, when the distance between the recognized user and the display device is smaller than the second reference distance.
